# EUROPEAN PATENT APPLICATION

(11) **EP 4 207 139 A1**
(43) Date of publication of application: **05.07.2023**
(21) Application number: 21218489.9
(22) Date of filing: 31.12.2021
(51) Int. Cl.: G09B 21/00

(54) **AN APPARATUS AND A SYSTEM FOR SPEECH AND/OR HEARING THERAPY AND/OR STIMULATION**

(71) Applicant: VoiceToys D.o.o., 11000 Belgrade (RS)
(72) Inventor: Markovic, Dragoljub, 11000 Belgrade (RS)
(74) Representative: Pribic, Jelena

(57) **Abstract**

The present disclosure refers to solutions within the field of apparatuses or devices for speech and hearing exercising, for instance improving the awareness of persons with hearing and speech impairments to their own voice and surrounding sounds, allowing to creatively experiment with their own senses and to visualise the sound of their voice and/or additional elements, thereby accelerating the learning process and improving the interaction between patients and therapists.

## Description

### FIELD OF THE DISCLOSURE

The present disclosure refers to solutions within the field of apparatuses or devices for speech and hearing exercising, for instance improving the awareness of persons with hearing and speech impairments to their own voice and surrounding sounds, allowing to creatively experiment with their own senses and to visualise the sound of their voice and/or additional elements, thereby accelerating the learning process and improving the interaction between patients and therapists.

The apparatus and the system according to present dislosure is also suitable for children with a typical developmental condition (without developmental disabilities) and for adults who need speech and hearing rehabilitation.

### PRIOR ART

Currently, various feedback tools designed to help individuals with hypophonia i.e. with too low/soft voice to increase their vocal intensity and reach standard levels of loudness are known. According to these prior art solutions, the patient's voice activates light, usually built in within a bracelet. When the bracelet switch is turned on, the light will be activated when the patient's voice reaches the appropriate level. The sensitivity is usually pre-set from factory.

Also known are various software tools for speech and voice quality training or therapy with visual and auditory biofeedback. Yet, these tools are used in the interaction between a personal computer / tablet and a user, not providing a specific and improved training tool.

A specific example is the system and method for speech therapy as disclosed in US 7,671,266 B2, relating generally to speech therapy and, more specifically, to a system and method for speech therapy and voice training using analysis of tonal and rhythmic structures. This prior art system utilizes tonal and rhythm visualization components to allow a person to "see" their words as they attempt to improve or regain their ability to speak clearly. The system is also applicable to vocal music instruction and allows students to improve their singing abilities, by responding to visual feedback which incorporates both colour and shape.

The present solution innovatively overcomes the described issues and improves the known solutions.

### SUMMARY OF THE DISCLOSURE

The present disclosure comprises an apparatus for speech and/or hearing therapy and/or stimulation.

The apparatus may comprise at least one microphone, processing means and feedback means.

Specifically, the microphone may be configured to obtain a voice signal from a voice emitted in its vicinity,
the processing means comprise voice processing means which are configured to convert said voice signal such that to at least one parameter of the voice signal, corresponds a visual element to be reproduced, and
the feedback means comprise at least one first feedback element, and the first feedback element is configured to visually present the converted voice signal in real-time through one or more visual elements, such that the visual presentation of the converted voice signal appears to be synchronized with the voice source emitted in the vicinity of the microphone.

Thus, the apparatus may be used in a speech and hearing therapy which is visually appealing, simple, user friendly and not distracting to the therapy process.

The apparatus provides a technologically advanced system for speech, hearing and developmental disorders treatment, i.e. for therapists' training-therapy and self-treatments.

The apparatus according to the present invention may be used not only for the therapy purposes but for the stimulation of the development of child speech and hearing functionalities.

This solution can provide immediate and precise identification of various inputs (such as sound level and pitch or movements), their analysis and interpretation (through the feedback means, e.g. in a visual manner).

It is also part of the present disclosure a system for speech and/or hearing therapy and/or stimulation which comprises a plurality of apparatuses as described in the present disclosure.

### DESCRIPTION OF FIGURES

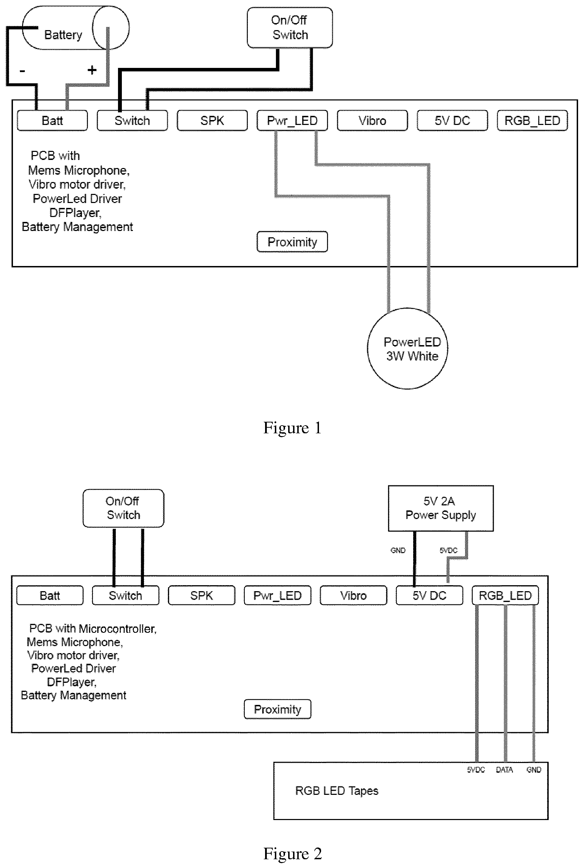

Figure 1 - representation of an apparatus according to the present disclosure, having a printed circuit board (PCB) with inputs and outputs for a set of further elements. When a plurality of such apparatuses is provided, a system is formed. Such apparatuses have first feedback elements with light poles (PowerLED 3W White). The PCB may have mounted in it a Microcontroller (µcontroller), a MEMS microphone, a vibration motor driver (not operating), a power LED driver (PowerLed Driver), a sound player (DFPlayer) (not operating) and a Battery Management element. It may have a coupled battery, provided in respective pins of the PCB (Batt). It may have a coupled On/Off Switch, provided in respective pins of the PCB (Switch). The PowerLED may be provided in specific pins (Pwr_LED). Other pins may be unused (Vibro, SPK, 5V DC and RGB_LED).
Figure 2 - representation of an apparatus according to the present disclosure, having a printed circuit board (PCB) with inputs and outputs for a set of further elements. The apparatus may have a multi-coloured surface formed by RGB LED Tapes, coupled to respective pins of the PCB (RGB_LED). The PCB may have mounted in it a Microcontroller, a MEMS microphone, a vibration motor driver (not operating), a power LED driver (PowerLed Driver) (not operating), a sound player (DFPlayer) (not operating) and a Battery Management element. It may be powered by a 5V 2A Power supply, having ground (GND) and 5 V power (5VDC) provided in respective pins of the PCB (5V DC). It may have a coupled On/Off Switch, provided in respective pins of the PCB (Switch). Other pins may be unused (Batt, SPK, Pwr_LED, Vibro).

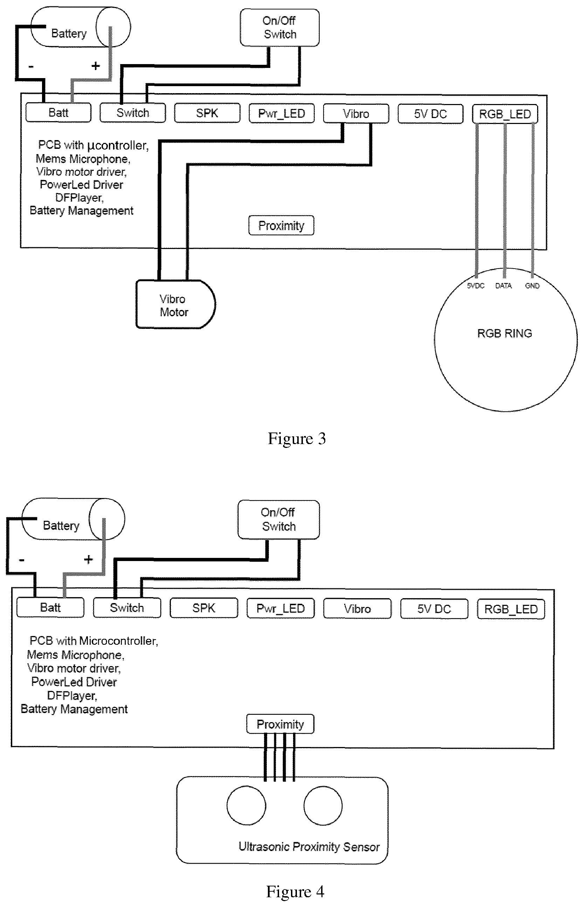

Figure 3 - representation of an apparatus according to the present disclosure, having a printed circuit board (PCB) with inputs and outputs for a set of further elements. The apparatus has a first feedback element providing visual feedback in an RGB Ring (RGB RING), connected to respective pins of the PCB (RGB_LED) and second feedback means which comprise haptic means, such as a vibration motor (Vibro Motor) coupled to respective pins of the PCB (Vibro). The PCB may have mounted in it a Microcontroller, a MEMS microphone, a vibration motor driver, a power LED driver (PowerLed Driver) (not operating), a sound player (DFPlayer) and a Battery Management element. It may have a coupled battery, provided in respective pins of the PCB (Batt). It may have a coupled On/Off Switch, provided in respective pins of the PCB (Switch). Other pins may be unused (SPK, Pwr_LED, 5V DC).
Figure 4 - representation of an apparatus according to the present disclosure, having a printed circuit board (PCB) with inputs and outputs for a set of further elements. The apparatus may have a second sensor which consists of an Ultrasonic Proximity Sensor, coupled to respective pins of the PCB (Proximity). The PCB may have mounted in it a Microcontroller, a MEMS microphone, a vibration motor driver (not operating), a power LED driver (PowerLed Driver) (not operating), a sound player (DFPlayer) (not operating) and a Battery Management element. It may have a coupled battery, provided in respective pins of the PCB (Batt).It may have a coupled On/Off Switch, provided in respective pins of the PCB (Switch). Other pins may be unused (SPK, Pwr_LED, Vibro, 5V DC and RGB_LED).

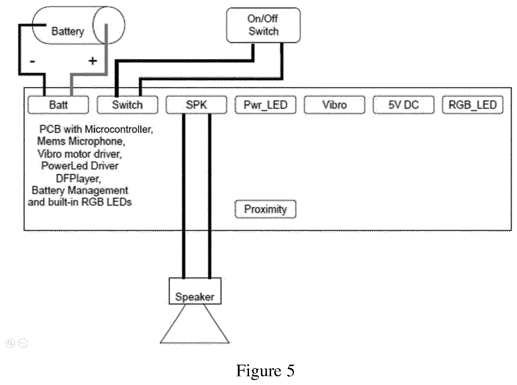

Figure 5 - representation of an apparatus according to the present disclosure, having a printed circuit board (PCB) with inputs and outputs for a set of further elements. The apparatus may have a speaker coupled to respective pins of the PCB (SPK). The PCB may have mounted in it a Microcontroller, a MEMS microphone, a vibration motor driver (not operating), a power LED driver (PowerLed Driver) (not operating), a sound player (DFPlayer, which controls the speaker) and a Battery Management element. It may have a coupled battery, provided in respective pins of the PCB (Batt). It may have a coupled On/Off Switch, provided in respective pins of the PCB (Switch). Other pins may be unused (Pwr_LED, Vibro, 5V DC and RGB_LED).

### DETAILED DESCRIPTION

The apparatus for speech and/or hearing therapy may comprise at least one microphone, processing means and feedback means.

The microphone may consist of any suitable means for obtaining a voice signal from a voice emitted in its vicinity. It may consist of a digital MEMS microphone with built-in A/D converter.

The processing means may provide different types of processing. The processing means may comprise voice processing means. Voice processing means are particularly configured to convert the voice signal obtained from the microphone.

The conversion of the voice processing means is such that, to at least one parameter of the voice signal, corresponds a visual element to be reproduced.

For instance, the at last one parameter of the voice signal may comprise pitch and/or sound level.

For instance, the at least one visual element to be reproduced may comprise colour and/or brightness.

Thus, for instance, to a higher pitch may correspond a darker colour, or a higher blinking frequency of a light.

In another example, to a more intense voice signal, which corresponds to a louder voice, may correspond a brighter light. Correspondingly, to a less intense voice signal, which corresponds to a lowed voice, may correspond a less bright light. The opposite options may also be suitable.

These visual elements are implemented by the feedback means, which comprise at least one first feedback element, and the first feedback element is configured to visually present the converted voice signal in real-time through those one or more visual elements.

The result of the feedback in real-time is that the visual presentation of the converted voice signal appears to be synchronized with the voice source emitted in the vicinity of the microphone.

The apparatus of the present disclosure includes the use of feedback means during the process of a patient's hearing and speech rehabilitation. It uses sensory integration during the rehabilitation process. A sound made by a patient can be clearly visualized (e.g. according to the level of intensity and frequency of the sound). The apparatus helps a patient to appropriately respond to light or other input, as subsequently described.

Furthermore, the apparatus for speech and/or hearing therapy uses a holistic approach in the rehabilitation process - the information from visual and auditory systems is integrated in order to reduce the variance in sound localization. The importance of this approach is clear, considering that over 70% of patients who are deaf or hard of hearing show sensory integration difficulties (Rhoades, 2001; Bharadwej, 2012).

The feedback means may further comprise at least one second feedback element and the voice processing means may be further configured to convert said voice signal such that to at least one parameter of the voice signal, such as pitch and/or sound level, corresponds a haptic element to be reproduced by the second feedback element, such as frequency or intensity of vibration.

In addition, the second feedback element may be configured to provide haptic feedback and thereby reproduce the converted voice signal in real-time through the one or more haptic elements, such that the reproduction of the converted signal in haptic feedback appears to be synchronized with the voice emitted in the vicinity of the microphone.

This solution thereby enables a connection between rhythm awareness and sound visualization. By imitating a rhythm and experiencing it visually and haptically at the same time, through a multisensory experience, patients gradually acquire new auditory cortical patterns. The patients with hearing loss thus gain the opportunity to visually observe the rhythm and prosodic characteristics of sound.

The apparatus may further allow a patient to repeat certain sounds accurately over time and to achieve better rhythm/temporal sound discrimination and control. It also helps users to overcome developmental problems caused by growing up in conditions of auditory deprivation.

The microphone and the feedback means may be provided within an enclosure.

The enclosure and the second feedback element may be such that the haptic feedback produced by the second feedback element is felt on the outside of the enclosure.

The enclosure may comprise a top part and a lateral grasping part suitable for a user to grasp, the top part being provided above the lateral grasping part, wherein and the first feedback element is provided such that the visual element is mostly viewable in the top part and the second feedback element is provided such that the haptic feedback is mostly felt in the lateral grasping part. This solution provides an enhanced manner of interacting with the user. The enclosure may be substantially cylindrical, in which the lateral grasping part is the lateral portion of the cylinder, while the top part forms the top base of the cylinder. It is thereby simple to grasp by the user, improving the sensing of the haptic feedback provided by the second feedback element. The same is entirely applicable to the visibility of the first feedback element while provided adjacently to the top part.

The first feedback element may alternatively comprise a multi-coloured panel having a front surface able to represent a plurality of coloured lights, wherein the visual elements are configured to present the at least one visual element through the changing of the lights. It therefore improves the feedback being provided to the user whose voice is being captured. In such case, the at least visual element may comprise:
turning a plurality of the lights on and off,
changing the colour of a plurality of the lights
adapting the intensity and/or frequency of the changing of colour or turning on and off of the lights, and/or
turning a light on and off or changing the colour of a light in a specific position of the surface.

The at least one visual element may thus further comprise creating one or more changing patterns in the surface such that the visual presentation of the converted voice signal in the surface through changing patterns appears to be synchronized with the voice source emitted in the vicinity of the microphone. These improved visual elements efficiently replicate the voice of the user/patient in real-time.

While including a multi-coloured panel, the apparatus may be linked with another device from the system, which further comprises a mat and a second sensor able to sense an impact provided on the mat or the proximity of a person in relation to the second sensor and provide a second signal.

In such case, the processing means may thus further comprise impact or proximity processing means which are configured to convert said second signal such that to at least one parameter of the second signal, corresponds a visual element to be reproduced. Additionally, the first feedback element may be further configured to visually present the converted second signal in real-time through one or more visual elements, such that the visual presentation of the converted second signal appears to be synchronized with the impact provided on the mat or the proximity of a person in relation to the second sensor sensed by the second sensor.

This solution further improves the connection between rhythm awareness and sound/movement visualization, thereby allowing to practice of the gross motor skills of patients - the basis of further kinesthetic and motor development which is necessary for speech development.

Through the determination of impact, it may be identified that a user is stepping into or jumping on the mat.

Through the determination of proximity, it may also be identified that a user is stepping into or jumping on the mat.

The parameter of the second signal may comprise frequency and/or intensity.

Again, the visual element to be reproduced may comprise colour and/or brightness.

The mat may consist of a jumping mat such as a trampoline.

The processing means may be provided in a printed circuit board. The printed circuit board may further comprise at least one input and at least one output, the input and the output are electrically connected to the processing.

The microphone and the feedback means may be provided on the printed circuit board or electrically connected to the at least one input and the at least one output, respectively.

Several features of the system are subsequently described.

Each apparatus of the plurality of apparatuses may comprise at least one microphone, and the brightness of each first feedback element of a same apparatus is adapted based on the intensity of the voice signal as measured by the microphone of the same apparatus, such that the intensity of light associated with an apparatus is dependent of the distance from a voice source emitted in the vicinity of the apparatuses and thereby of the respective microphones, thereby providing a visual representation of voice propagation through a space in which the apparatuses are arranged.

In such case, a distance between each apparatus and the voice source is identifiable, by means of the intensity of the voice signal. Each apparatus may thereby adapt its feedback means, for instance through the intensity or brightness of the emitted light, accordingly.

Thus, an apparatus which is closer to the voice source will have a brighter light, while an apparatus which is farther away will have a less bright light. For a plurality of apparatus part of the system, such creates an effect in the patient which provides feedback on the intensity of his/her voice through space.

Alternatively, a single apparatus of the plurality of apparatuses comprise a microphone.

In such case, each apparatus comprises communication means, optionally wireless communication means. The brightness or intensity of the light of each first feedback element of a same apparatus is thereby adapted based on the intensity of the voice signal as measured by the microphone of the single apparatus comprising a microphone and an expected distance between apparatuses, such that the intensity of light associated with an apparatus is related to the measured voice signal and an expected distance from a voice source emitted in the vicinity of the apparatuses, thereby providing a visual representation of voice propagation through a space in which the apparatuses are arranged.

Again, an apparatus which is closer to the voice source will have a brighter light, while an apparatus which is farther away will have a less bright light. For a plurality of apparatus part of the system, such creates an effect in the patient which provides feedback on the intensity of his/her voice through space.

Again, in such case, a distance between each apparatus and the voice source is also identifiable, but now by means of the intensity of the voice signal in the apparatus comprising a microphone and an expected distance, which may be input by a user or automatically determined by the apparatuses.

If automatic, the communication means are wireless means and the expected distance is determined through the exchange of one or more wireless signals between the communication means of the single apparatus comprising a microphone and the communication means of each of the other apparatuses, thereby obtaining a signal strength indicator associated with each of the other apparatuses and therefrom the expected distances each apparatus and the voice source emitted in the vicinity of the apparatuses.

Further features of the apparatus are subsequently presented.

The apparatus may comprise an excitement element such as a microphone, feedback means and a mobile application able to be installed in a device such as a smartphone or a tablet. The apparatus may comprise one or more microcontrollers. The processing means, in particular, may comprise one or more microcontrollers. Each microcontroller may be wirelessly updated with a particular set of instructions.

The excitement element is capable of receiving signals from an environment and/or a mobile device. Further, the excitement element is in communication, be it cabled or wireless, with the feedback means, through the processing means.

The apparatus, as previously described, may comprise a printed circuit board (PCB) that identifies various inputs (such as sound levels and pitch, movements, mobile app inputs, etc.), wherein the analysis and interpretation of such signals may be performed locally or in other devices. The PCB may have a microphone, a microcontroller, battery management, and different expansion slots and connectors that enable it to be used in several different alternatives as herein disclosed, but also possibilities not herein explicitly disclosed.

A mobile application installed in a device such as a smartphone may wirelessly communicate (e.g. through a Bluetooth or another kind of local area network protocol controller) with the apparatus, thereby allowing for a user to further interact and configure apparatus, sending different control parameters to them.

With regard to the system, it may comprise, for instance, five apparatuses. Each of such apparatuses may have a rechargeable battery.

The first feedback means may comprise light poles. The microphone is triggered by the human voice and the apparatuses are arranged in space so that each apparatus responds to the sound level which is corresponding to its distance as light of various intensity levels, on the respective light pole. Associated microcontrollers may be programmed so that the sound level is displayed by decreasing sensitivity of poles gradually with the distance from the voice source, so that there is less light intensity on the light pole which is the most distant from the voice source.

A first apparatus comprising a first feedback element which consists of a pole may have a built-in microphone, and is placed close to the patient. Other apparatuses/poles are automatically, wirelessly connected to the first pole and respond to the sound immediately. The sound level is displayed by decreasing sensitivity of poles gradually with the distance from the patient, so the patient may have to shout louder to light farther poles, while nearest ones react to lower sounds.

When in use, a therapist may ask the patient to produce a voice in a specific way, e.g. to make a sound of a certain type and intensity level. For example, a loud cow or a soft kitty cat. The patient can see if all the apparatuses/poles are turned on by the power of his/her voice, or only the nearest ones, and the patient can thereby observe how differences in voice intensity cause the differences in the number of lights lit and may properly adjust the voice as needed. This is how a patient gradually learns to adjust voice intensity control in a way that he/she can understand. As soon as the voice stops, the lights turn off. The patient visualizes his/her own voice and becomes aware of its power, reach and audibility.

Therapists can individually create different hearing and listening exercises and adjust the intensity level for individual voice possibilities of every patient. Not only the patient's voice can turn the lights on, but other sounds as well: clapping hands, whistling, tapping the surface of objects, creaking, crunching, walking etc.

The system can also be used for identifying and eliminating harmful voice patterns (such as screaming, making loud play sounds), decreased vocal endurance, various types of dysphonia, aphonia, dysphemia, spasmophemia, dysarthria, different types of stuttering, vocal cord paralysis, dysprosody, articulation disorders, phonemic disorders, bradylalia, diplophonia, laryngeal/spasmodic dystonia, ADD - ADHD.

In addition, the system can also be used in the process of learning to count and memorizing series of numbers. A random number of poles is lit by the command from the mobile application, and the patient is asked to identify the right number. Larger series of random numbers are intended for exercising memory skills.

When comprising a multi-coloured panel, the feedback means of the apparatus may consist of a 120cm high light emission device, based on smart RGB LED tapes. In addition, the apparatus may further be wirelessly linked to another device comprising a sensor able to sense an impact provided on the mat or proximity of a user in relation to the second sensor, and to obtain a second signal. A microphone may still be provided. The second sensor on a linked device may be an ultrasonic proximity sensor, placed underneath the mat/trampoline.

The source may be set by means of the mobile app: second sensor or microphone. If the source is the microphone, the feedback means by means of the first feedback element turn on lights such as LED lights from the bottom up, according to the sound level. If the source is the second device equipped with proximity sensor, the first feedback element turns on lights such as LED lights from the bottom up, according to the distance from the sensor to the mat surface. The first feedback element can also emit calming lights without any input, if selected by the mobile app, which is commonly used in snoezelen therapy rooms.

When the first feedback element comprises a multi-coloured panel, the apparatus may be fixed on the wall, optionally being powered by AC.

It may visually show measured levels by turning on coloured lights from the bottom to the top of the surface, according to the sound level or jumping on the mat. The sensitivity can be adjusted using a mobile application, as well as the various sources of excitation - second device equipped with proximity sensor or the microphone.

Patterns such as the speed of the decay of illuminated lights, peak value of the measurement or its properties can also be controlled.

The microphone may be built-in; thus, no cables or external microphone are required. The microphone is a sensitive and accurate microphone, so the patient can stand anywhere in the room and trigger the device even with the slightest sound produced.

When the microphone is selected as the excitement source, the therapist asks a patient to produce a sound, phoneme or sentence in a certain way. The patient immediately observes how the light rises from the bottom of the surface of the first feedback element (following the rhythm of speech) and when the peak is reached (depending on the voice intensity). This type of apparatus is particularly suitable for younger patients (users), because of their clear, concrete representation of prosodic elements of speech. The therapist can use it for exercises such as: impostation of the patient's basic voice, voice intensity control, temporal processing, improvement of the rhythm and duration of the patient's voice.

When the second device equipped with proximity sensor is selected as the excitement source, the therapist shows a patient how he/she can jump on the mat and watch how his/her movements make the lights on the surface of the first feedback element move. This sort of apparatus can be used for practicing the gross motor skills of patients - the basis of further kinaesthetic and motor development which is necessary for speech development.

As previously described, the apparatus may comprise a second feedback element providing haptic feedback, such as a vibration motor, and first feedback means providing visual feedback, such as circular RBG LEDs.

When the built-in microphone is activated by the voice, the apparatus reacts by vibrating and emitting light depending on the intensity of the voice. The colour of the lights is controlled by the pitch of the voice.

The second feedback element may comprise a vibrotactile box which responds to the intensity and frequency of the sound by producing slight to moderate vibration. In addition, the first feedback element may comprise gentle lights of various colours. Colours are changed according to the pitch of the voice. Sound level affects vibration intensity and the brightness of the lights. The microphone is built-in into the apparatus - its enclosure. The apparatus is rechargeable, battery powered. The mobile application can turn lights and vibration on and off and control their sensitivity.

The patient puts his hands on the sides of the apparatus, as previously described, leaving the top part visible, or holds the apparatus in his/her hands. The therapist produces sounds and words which initiate lights and vibration, and after the patient sees and feels it, the therapist asks him to repeat the process.

While the patient is holding the enclosure of the apparatus and looking at it, the therapist taps on the surface next to the apparatus, producing a certain tempo and instructs the patient to reproduce it. Later on, the exercise moves to producing and reproducing a tempo with phonemes (vowels work best) and then, finally, with short words or sentences. The patient should be looking at and holding the apparatus at all the time.

This exercise can be used for treating bradilalia, verbal apraxia, various types of language disorders, voice exercises for Parkinson's disease, delayed auditory feedback, auditory processing and auditory discrimination disorder. The apparatus provides patients with sensorimotor stimulation, audio-visual processing of sound and additional feedback loops (vibrotactile and visual) which provide them with better insight into the intensity and frequency of their voice.

With regard to the system comprising a plurality of apparatuses, it may comprise five apparatuses.

Each of such apparatuses comprises a rechargeable battery and one or more smart speakers, which may be used for the localization of sound sources.

Sound localization is a listener's ability to identify the location of a detected sound in terms of direction and distance. It can also be used with patients with visual impairment, since their acoustic skills are very important for compensating for their visual disability.

These apparatuses, by further comprising speakers, are lightweight, self-contained, wireless and battery powered. They have enclosures or housings that are coloured in pure, basic colours, for easy identification.

Apparatuses comprising speakers can easily be moved around or hung on a wall. On the mobile application, sounds are represented by easily identifiable icons, placed in coloured squares which represent the colour and the position of the apparatuses comprising speakers.

The patient is placed in a position to be surrounded by the apparatuses comprising speakers. The therapist then selects the sound (for example a dog bark) and the direction from which the sound will be heard (for example directly behind the patient) by clicking an image on the mobile application, wherein the direction corresponds to a specific apparatus comprising a speaker. The patient should clearly state from which direction the sound was heard. Every answer is rated by the therapist, pressing "OK" or "NOT OK" buttons in the mobile application, which form commands for the apparatuses. Apparatuses comprising speakers respond to the "OK" or "NOT OK" commands by emitting sounds and lights, indicating true or false answers.

The system may also comprise apparatuses in turn comprising speakers suitable for spatial memory game with lights and sounds in which it plays random sequences of sounds from different positions. The player is asked to memorize and repeat as much as he can.

The microcontrollers can be easily, wirelessly updated. Thus, the apparatus and its microcontrollers may be modified and improved with additional functions according to the user's requirements.

An apparatus may be made of harmless materials and its enclosure may contain no sharp edges in order to minimize the risk of injury.

In addition, the apparatus may have no external cables, having a rechargeable battery and providing wireless communications.

An apparatus may be are visually appealing, simple, user friendly and not distractive to the therapy and/or exercising process.

The mobile application may also track patient's results by receiving information from the apparatus and/or system (the amount and speed of false and correct answers). If the therapist is logged into the Cloud, every score is copied to the Cloud database, and can be displayed and analysed in a web application. The therapist can see a patient's progress in real time and save the data for further monitoring of the patient's results.

The apparatus and the system may be also used for the treatment of spatial hearing loss, central auditory processing disorder, auditory memory disorder, autism spectrum disorder, ADD-ADHD.

It provides patients with auditory pattern recognition, sound localization and lateralization, recognition of auditory information presented within a background of noise or competition, recognition of separated auditory stimuli presented to each ear simultaneously (binaural integration training and separation skills).

### EXAMPLES AND TESTS

The solutions of the present disclosure have been tested by many private and state-held institutions, speech therapists and early diagnosis centres for children with hearing and speech.

The main goal of the solutions of the present disclosure is to help the patients in need become aware of their own voice, allow them to creatively experiment with their own senses and visualize their voice and movements or jumping, and thus to adapt to the therapy and/or exercising process much faster and easier. The devices disclosed in the present application have strong psychological - motivational impact, which makes exercising more appealing and relaxed. Patients reacted to these devices with anticipation and joy. These devices accelerated the learning process and improved the interaction between the therapists and patients.

The solutions of the present disclosure proved to be useful for the practice of speech and language pathologists for numerous speech, hearing and developmental disorders, such as:
- dysarthria, stuttering, apraxia
- alalia
- different language delays (which occur when a patient's language skills are acquired in a typical sequence, but lag behind peers their own age)
- for developing phonological awareness skills - voice analysis and voice synthesis practice
- with all types of hearing loss (for sound detection, sound localization, sound discrimination, pronunciation, for improving temporal processing and intensity qualities of speech of people with hearing disabilities)
- for auditory attention disorder and auditory processing disorder
- for the impostation of the basic voice with people who are hard of hearing (or have troubles with controlling their own voice energy for any other reason)
- attention deficit/hyperactivity disorder
- patients with developmental delay and autism spectrum disorders (who have many troubles with speech and language)
- blind people who need to develop their sound localization skills in a more complex way
- linguistic and non-linguistic auditory memory
- linguistic and non-linguistic dichotic ability
- speech-in-noise.

The performed tests have demonstrated that the apparatus and the system allow patients to be active participants in the rehabilitation and/or exercising process. Its playful and simple to use design increases patient's motivation, attention during the treatment and/or exercise and makes the rehabilitation process highly enjoyable for impaired people. When in use, the apparatus and the system enable users to progressively modify and adjust the speech/listening exercises by using the high technology acoustic qualities of the system. Furthermore, they improve the analytic-synthetic functions of the cerebral cortex of people with sensory impairments. They further extend the benefits of directed listening/speech training and early rehabilitation, since deaf people/people speech and language difficulties are easily distracted. They also allow the users to create different voice/speech exercises and to set the rehabilitation goals for every patient individually. The user can easily develop different acoustic qualities of the voice of user with hearing/speech disorders by setting a threshold for activating the visual or vibratory feedback.

The apparatus, the system, the processing, the communication means and/or their elements include components to perform at least some of the example features and features of the methods described, whether through hardware components (such as memory and / or processor), software or any combination thereof.

In particular, the processing means may consist of or comprise one or more microcontrollers, with the capability of receiving external data through inputs and providing actuation of outputs, based on predefined configured rules and/or programming.

An article for use with the apparatus, the system, the processing means or the communication means, such as a pre-recorded storage device or other similar computer-readable medium, including program instructions recorded on it, or a computer data signal carrying readable program instructions computer can direct a device to facilitate the implementation of the methods described herein. It is understood that such apparatus, articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the specific details described herein, and a number of changes are possible which remain within the scope of the present disclosure.

Of course, details of the apparatus and system shown above are combinable, in the different possible forms, being herein avoided the repetition all such combinations.

## Claims

1. An apparatus for speech and/or hearing therapy and/or stimulation **characterized in that** it comprises at least one microphone, processing means and feedback means, wherein the microphone is configured to obtain a voice signal from a voice emitted in its vicinity,
the processing means comprise voice processing means which are configured to convert said voice signal such that to at least one parameter of the voice signal, corresponds a visual element to be reproduced, and
the feedback means comprise at least one first feedback element, and the first feedback element is configured to visually present the converted voice signal in real-time through one or more visual elements, such that the visual presentation of the converted voice signal appears to be synchronized with the voice source emitted in the vicinity of the microphone.

2. An apparatus according to the previous claim wherein the at last one parameter of the voice signal comprises pitch and/or sound level and/or
the at least one visual element to be reproduced comprises colour and/or brightness.

3. An apparatus according to the previous claim wherein the feedback means further comprise at least one second feedback element,
wherein the voice processing means are further configured to convert said voice signal such that to at least one parameter of the voice signal, such as pitch and/or sound level, corresponds a haptic element to be reproduced by the second feedback element, such as frequency or intensity of vibration, and
and the second feedback element is configured to provide haptic feedback and thereby reproduce the converted voice signal in real-time through the one or more haptic elements, such that the reproduction of the converted signal in haptic feedback appears to be synchronized with the voice emitted in the vicinity of the microphone.

4. An apparatus according to any of the preceding claims wherein the microphone and the feedback means are provided within an enclosure.

5. An apparatus according to claims 3 and 4 wherein the enclosure and the second feedback element are such that the haptic feedback produced by the second feedback element is felt on the outside of the enclosure.

6. An apparatus according to the previous claim wherein the enclosure comprises a top part and a lateral grasping part suitable for a user to grasp, the top part being provided above the lateral grasping part, wherein and the first feedback element is provided such that the visual element is mostly viewable in the top part and the second feedback element is provided such that the haptic feedback is mostly felt in the lateral grasping part.

7. An apparatus according to any of the preceding claims when dependent of claim 4 wherein the first feedback element comprises a multi-coloured panel having a front surface able to represent a plurality of coloured lights, wherein the visual elements are configured to present the at least one visual element through the changing of the lights.

8. An apparatus according to the previous claim wherein the at least visual element comprises:
turning a plurality of the lights on and off,
changing the colour of a plurality of the lights
adapting the intensity and/or frequency of the changing of colour or turning on and off of the lights, and/or
turning a light on and off or changing the colour of a light in a specific position of the surface.

9. An apparatus according to the previous claim wherein the at least one visual element further comprises creating one or more changing patterns in the surface such that the visual presentation of the converted voice signal in the surface through changing patterns appears to be synchronized with the voice source emitted in the vicinity of the microphone.

10. An apparatus according to any of the claims 7-9 wherein it further comprises a mat, optionally a jumping mat such as a trampoline, and a second device equipped with proximity sensor able to sense an impact provided on the mat or the proximity of a person in relation to the second sensor and provide a second signal, the processing means further comprising impact or proximity processing means which are configured to convert said second signal such that to at least one parameter of the second signal, such as frequency and/or intensity, corresponds a visual element to be reproduced, such as colour and/or brightness.

11. An apparatus according to any of the preceding claims wherein the processing means are provided in a printed circuit board, the printed circuit board further comprising at least one input and at least one output, the input and the output being electrically connected to the processing, the microphone and the feedback means being provided on the printed circuit board or electrically connected to the at least one input and the at least one output, respectively.

12. A system for speech and/or hearing therapy and/or stimulation **characterized in that** it comprises a plurality of independent apparatuses according to any of the preceding claims.

13. A system according to the previous claim wherein each apparatus comprises at least one microphone, and the brightness of each first feedback element of a same apparatus is adapted based on the intensity of the voice signal as measured by the microphone of the same apparatus, such that the intensity of light associated with an apparatus is dependent of the distance from a voice source emitted in the vicinity of the apparatuses and thereby of the respective microphones, thereby providing a visual representation of voice propagation through a space in which the apparatuses are arranged.

14. A system according to claim 12 wherein a single apparatus of the plurality of apparatuses comprises a microphone and each apparatus comprises communication means, optionally wireless communication means, wherein the brightness of each first feedback element of a same apparatus is adapted based on the intensity of the voice signal as measured by the microphone of the single apparatus comprising a microphone and an expected distance between apparatuses, such that the intensity of light associated with an apparatus is related to the measured voice signal and an expected distance from a voice source emitted in the vicinity of the apparatuses, thereby providing a visual representation of voice propagation through a space in which the apparatuses are arranged.

15. A system according to the previous claim wherein the communication means are wireless means and the expected distance is determined through the exchange of one or more wireless signals between the communication means of the single apparatus comprising a microphone and the communication means of each of the other apparatuses, thereby obtaining a signal strength indicator associated with each of the other apparatuses and therefrom the expected distances each apparatus and the voice source emitted in the vicinity of the apparatuses.
